Europäisches Patentamt

European Patent Office

Office européen des brevets

(11) Publication number: **0 570 794 A2**

## EUROPEAN PATENT APPLICATION

(21) Application number: **93107553.5**

(22) Date of filing: **10.05.93**

(51) Int. Cl.5: **A01N 37/10,** A01N 37/06,
A01N 37/02, A01N 37/40,
A01N 43/12

(30) Priority: **18.05.92 EP 92108345**

(43) Date of publication of application:
**24.11.93 Bulletin 93/47**

(84) Designated Contracting States:
**CH DE ES FR GB IT LI NL**

(71) Applicant: **GIVAUDAN-ROURE
(INTERNATIONAL) S.A.**

**CH-1214 Vernier(CH)**

(72) Inventor: **McGee, Thomas
5 Kingswood Drive
Orangeburg, New York 10962(US)**

(74) Representative: **Urech, Peter, Dr. et al
Grenzacherstrasse 124
Postfach 3255
CH-4002 Basel (CH)**

(54) **Preservative systems.**

(57) A novel preservative system comprises one or more of organic acids selected from the group consisting of benzoic acid, sorbic acid, propionic acid, undecylenic acid, salicylic acid, formic acid, usnic acid and/or an ester, and/or a salt thereof, and an antimicrobial perfume or perfume component.

EP 0 570 794 A2

The invention relates to preservative systems, comprising

a) an organic acid or a mixture of organic acids, with known preservative action, said acids being selected from the group consisting of benzoic acid, sorbic acid, propionic acid, undecylenic acid, salicylic acid, formic acid, usnic acid and/or their salts, such as their alkali metal salts, in particular the sodium and potassium salt, and/or their esters, such as their lower alkyl esters , in particular the methyl or ethyl ester,

b) a "preservative perfume", i.e. a fragrance which has an antimicrobial action.

The term "preservative perfume" used - in the context of the present invention - synonymously with the terms

"antimicrobial perfume", or

"antimicrobial fragrance", or

"preservative fragrance"

is defined below.

It has been found that cost effective preservative systems can be formulated with combinations of both an antimicrobial fragrance and a preservative organic acid as enumerated above, in particular destined for aqueous products, in particular those containing a surface active agent.

The nature of these surface active agents depends on the nature of the final product enumerated below and the skilled artisan is familiar with the proper choice. A wide range of such agents known in the art exists, and those agents may belong in particular to the following chemical classes:

i) Anionic surface active agents, such as metallic, ammonium or alkanolamine salts of the following classes:

alkyl benzene sulphonates, for example triethanolamine dodecyl benzene sulphonate;

alkyl sulphates, for example ammonium lauryl sulphate;

alkylether sulphates, for example sodium lauryl ether sulphate;

sulphosuccinates, for example sodium dioctyl sulphosuccinate;

monoglyceride sulphates, for example sodium glyceryl monostearate monosulphate;

isothionates, for example sodium isotheionate;

methyl taurides, for example Igepon T®;

acylsarcosinates, for example sodium myristyl sarcosinate;

acyl peptides, for example the Maypons® and the Lamepons®;

acyl lactylates;

polyalkoxylated ether glycolates, for example trideceth-7 carboxylic acid;

alkyl-phosphates, for example sodium dilauryl phosphate.

ii) Cationic surface active agents, such as amine salts, for example sapamin hydrochloride, Armeen T®, etc.

Quartenary ammonium salts, for example Quaternium 5®, Quaternium 31® and Quaternium 18®;

iii) Amphotheric surface active agents, such as imidazol compounds, for example Miranol®;

N-alkyl amino acids, such as sodium cocaminopropionate and asparagine derivatives;

betaines, for example cocamidopropylbetaine, etc.

iv) Nonionic surface active agents, such as fatty acid alkanolamides, for example oleic ethanolamide;

esters of polyalcohols, for example Span®; polyglycerol esters, for example those esterified with C12-18 fatty acids and one or several OH groups;

Polyalkoxylated derivatives, for example polyoxy/polyoxyethylene stearate;

Alkyl polyglucosides, for example coco diglucoside;

esterified ethers, for example the Tween®;

amine oxides, for example dodecyl dimethyl amine oxides and the like.

Mixtures of two or more of the above surface active agents or others used in the art can be employed in the compositions according to the present invention.

The combination acts synergistically, in that the spectrum of activity of the organic acids is increased with antimicrobial fragrances at a combined level below what would be required separately to provide a full-preservative action.

The novel preservative system consists of the combination of ingredients outlined above and is preferably added to a final product to prevent microbial spoilage of the product; it is bacteriocidal or bacteriostatic and also fungicidal or fungistatic.

An effective preservative system is one which prevents the multiplication of any bacteria (Gram positive or Gram negative) and fungi and yeast over the product's lifetime or during use.

The antimicrobial properties of the above organic acids are well known (see series J.R. Gucklhorn, Mfg Chem. Aerosol News, 40-42, 1969-1971). They, however, only function effectively within a narrow range of

2

pH, e.g. < pH7, (D.L. Wedderburn, P. 463-464 in Handbook of Cosmetic Science, ed. H.W. Hibbot, Pergammon Press 1963). They also do not have as wide a spectrum of activity as other chemical preservatives such as bronopol, formaldehyde, etc.

The fact that some perfume materials have antimicrobial properties is also well known. Two reviews cover most of the literature to 1984 viz. J.J. Kabara, P. 237-273 in Cosmetic and Drug Preservation, ed. J.J. Kabara, Marcel Dekker, 1984 and H. Isacoff, P. 85-109 in Chemistry and Manufacture of Cosmetics, 2nd Edition by M.G. De Navarre, Continental Press, 1975.

The principle of formulating an antimicrobial perfume is given by J.M. Blakeway and M. Seu-Salerno in "A New Principle for the Microbiological Preservation of Cosmetics" 11th International IFSCC Congress 23-26 Sept. 1980 Venice Italy, preprints VII, P. 415-426. They showed that by determining the minimum microbiocidal concentration (MMC) of each fragrance ingredient against specific micro-organisms it is possible to compute the MMC of the mixture and, hence, formulate an effective preservative perfume to meet standard preservative challenge tests which predict efficacy. Normally the level of perfume required for full preservative action in an aqueous product is greater than 0.5%.

The antimicrobial activity of individual fragrance ingredients is a complex function, e.g. of such factors as chemical structure, HLB (the hydrophilic - lipophilic balance, which is a measure of the perfume ingredient's tendency to partition into the aqueous or non-aqueous phase), molecular weight, etc. It is, therefore, not possible to give an exact chemical definition and, rather, each individual ingredient has to be screened by suitable techniques, e.g. J.L. Rios, M.C. Recio and A. Villar, J. of Ethnopharmacology 23, 1988, 127-149.

Some examples, not exhaustive, of fragrance ingredients with an antimicrobial activity are:

| Aldehydes | Cinnamic aldehyde |
| | Undecylenic aldehyde |
| | Benzaldehyde |
| Alcohols | Phenyl ethyl alcohol |
| | Cinnamyl alcohol |
| | Citronellol |
| Acids | Iso valeric acid |
| | Phenyl acetic acid |
| | 2-methyl-2-pentenoic acid |
| Ketones | Methyl hexyl ketone |
| | Cis-jasmone |
| | Methyl acetophenone |
| Esters | Amyl acetate |
| | Anisyl propionate |
| | Iso butyl benzoat |
| Miscellaneous | Eugenol |
| | Thymol |
| Essential oils | Bergamot oil, e.g. distilled, |
| | Clove oil, |
| | Eucalyptus oil, etc. |

and the like.

The term "perfume" embraces thus conventional fragrance ingredients, be they of synthetic or natural origin or any mixtures of such ingredients, whose principle function is to fragrance.

The term "preservative perfume" embraces a conventional fragrance ingredient or mixtures of conventional fragrance ingredients which have an antimicrobial activity when present at concentrations greater than the MMC of the component or of the components in an aqueous system, which system is thus capable of inhibiting the growth of microorganisms. A preservative fragrance is one which will satisfy any standard preservative efficacy test in which the ability of the system to reduce a high level of microorganisms to below an acceptable level is established. Such a test is described below:

Preservative Efficacy Test

The following standard test microorganisms are used to represent Gram positive and Gram negative bacteria, molds and yeast:

|  | Ex Pasteur Institute Ref. No. |
|---|---|
| Staphylococcus aureus (Gram positive bacterium) | IPP 53 156 |
| Escherichia coli (Gram negative bacterium) | IPP 548 |
| Candida albicans (a yeast) | IPP 1180 |

Test bacteria are grown in test tubes by aseptically removing a colony from the standard organism and culturing it on nutrient agar slopes at 37°C overnight. Suspensions are prepared freshly with sterile distilled water and adjusted to $10^8$ colony forming units (CFU) per ml by turbidimetry.

The procedure is identical for molds and yeasts except that the incubation is for 3 days at 30°C in Sabouraud's dextrose medium.

2 g of the perfume under test are solubilised with twice the quantity of the solubilizer ethoxylated nonyl phenol (10 mole ethoxylate) and made up to 100 ml with sterile distilled water. 99 ml of the solution are introduced into a 250 ml sterile flask.

1 ml of the respective inoculum ($10^8$ CFU) is added aseptically to the flask and the contents mixed by gentle agitating. The sample is incubated for 7 days at 30°C.

0.1 ml of the incubated solution is added to plate count agar containing 2% Tween 20 and incubated for 24 hours at 37°C. The number of CFUs are determined by counting visually.

For molds and yeast 0.1 ml of the incubated solution is added to a Sabouraud's gel plate containing 2% Tween 20 and incubated at 30°C for 3 days. The number of CFUs is counted visually.

The perfume is judged preservative against the microbes, for cosmetics, if the CFUs/ml are below ca. 1000, preferably even below ca. 100 - in particular for baby products (see Microbiological Limit Guidelines for Cosmetics and Toiletries (1985), published by The Cosmetic, Toiletry and Fragrance Association, London, and the CTPA recommended Microbiological Limit Guidelines for Microbiological quality control (1986), published by the Cosmetic, Toiletry and Perfumery Association, London).

The formulation of preservative perfumes follows the principle of Blakeway and Seu-Salerno, in that it must contain the active ingredients at a combined level to give an MMC as determined above. The combination of ingredients is infinite, however, some simple preservative perfume compositions A→D are shown below for illustrative purposes:

|  | preservative perfume formula | | | |
|---|---|---|---|---|
|  | A | B | C | D |
| Benzyl acetate * |  |  | 12.5 | 6.25 |
| Cinnamic aldehyde * | 50 | 25 | 12.5 | 6.25 |
| Phenyl ethyl alcohol * | 50 | 25 |  | 6.25 |
| Distilled bergamot * |  | 25 | 12.5 | 6.25 |
| D-limonene |  | 25 |  | 6.25 |
| Argeol ** |  |  | 12.5 | 6.25 |
| Lilial |  |  | 12.5 | 6.25 |
| Paracresyl acetate * |  |  | 12.5 | 6.25 |
| Phenyl ethyl formate * |  |  | 12.5 | 6.25 |
| Heliotropin * |  |  | 12.5 | 6.25 |
| Amyl acetate * |  |  |  | 6.25 |
| Galaxolide |  |  |  | 6.25 |
|  | 100 | 100 | 100 | 100 |

* Screened by the above Preservative Efficacy Test as having an antimicrobial activity.

** Argeol : Schiff's base of hydroxy citronellal and methyl anthranilate.

The use of preservative fragrance ingredients in combination with chemical preservatives has been reported. In EP-B-144417 the use of cinnamic aldehyde and parabens as preservatives is described. Phenyl ethyl alcohol in combination with phenols, organomercurials and quaternary ammonium compounds have been studied (P.G. Hugba, Cosmet. and Toiletries 92 (3), 52-56, 1977). However, none of these references describe the synergistic combination of preservative organic acids and preservative fragrances.

The effectiveness of the mixture of organic acids and preservative perfume may vary with the composition. The final selection of the levels and ratios of organic acids to preservative fragrance must take into account the composition and intended use of the product. This is normal for any preservative system, see W.E. Rosen and P.A. Berke, Modem Concepts of Cosmetic Preservation, J. Soc. Cosmet. Chem. 24, 663-675, 1973.

The levels and ratios may be easily established with the preservative efficacy test described above to assess the preservative action of the perfume using the actual product to be preserved as the test medium.

The preferred products to be preserved are aqueous systems containing at least 10% water, and more generally at least 25% water, many with as much as 35% or more water. Other components will be surface active agents, such as outlined above to act as emulsifiers or foaming or cleaning agents. The level of surface active agent will conveniently be between 0.1% and 50% and more, in particular between 0.2% and 35%.

The preservative system of the invention consists of one acid or a mixture of preservative organic acids as enumerated above, present in the final product at levels between ca. 0.01% a and 1%, preferably ca. 0.05% to 0.5%; and a preservative fragrance at levels between, ca. 0.05% and 2%, preferably ca. 0.3% to 0.7%. Although not required, other preservatives may be present, but preferably these are below 0.01%.

The products are not intended for ingestion and examples which can be preserved cost-effectively by the system of the invention are, inter alia :

household cleaning products, such as general purpose cleaners, dishwahing liquids, abrasive liquid cleaners, body washing products such as liquid soap, shower gels and bath foams; fabric care products such as heavy duty liquids, light duty liquids, woolwash liquids and fabric conditioners and personal care products such as shampoos, mouth washes, tooth pastes, skin creams and lotions, sunscreen creams and liquids, hair conditioners etc.

The other components of these products are those which those skilled in the art of their formulation use, such as:

colourants, builders, pH buffers, UV screens, abrasives, anti-cavity ingredients, gum health ingredients, polymers, cationic conditioning materials, silicones, opacifiers, antioxidants, etc.

As stated above, the exact level and ratio of organic acid to preservative fragrance will have to be defined for each product, as the preservative effectiveness is influenced by the other components and the physicochemical properties of the product to be preserved.

However, the levels and ratio of the organic acid and preservative fragrances required for effective preservation will be within those limits defined above and will be sufficient to maintain the microorganisms to below a viable count in standard preservation test as described above.

Example 1

A perfume consisting of

|  | % (W/W) |
|---|---|
| Benzyl acetate | 35.0 |
| Phenylethyl alcohol | 38.0 |
| Linalol | 13.0 |
| Argeol | 3.9 |
| Lilial | 9.0 |
| Indolene 100 % | 0.4 |
| Paracresyl acetate | 0.1 |
| Cinnamic aldehyde | 0.1 |
| d- Limonene | 0.5 |
|  | 100.0 |

was prepared.

This was tested by the preservative efficacy test above and the following results were obtained:

| | CFU/ml |
|---|---|
| Staphylococcus Aureus (SA) | <20 |
| Escherichia Coli (EC) | <20 |
| Candida Albicans (CA) | <20 |

The perfume is thus preservative.

The synergistic action of a preservative perfume and an organic acid was studied by formulating products A to I using preservative free sodium lauryl ether 2EO sulphate (SLES) and the cocoamido propyl betaine (Tego) as the surfactants and H26 and sorbic acid as the preservative perfume and organic acid respectively.

| Formula: | A | B | C | D | E | F | G | H | I |
|---|---|---|---|---|---|---|---|---|---|
| SLES 2EO | 10.0 | 10.0 | 10.0 | 10.0 | 10.0 | 10.0 | 10.0 | 10.0 | 10.0 |
| Tego | 4.0 | 4.0 | 4.0 | 4.0 | 4.0 | 4.0 | 4.0 | 4.0 | 4.0 |
| H26 | 0.5 | 1.0 | 1.5 | 2.0 | - | - | - | 0.5 | - |
| Sorbic acid | - | - | - | - | 0.1 | 0.2 | 0.3 | 0.1 | - |
| water to 100 pH = 5 | | | | | | | | | |

Thus, the preservative action of different levels of the preservative fragrance can be established from testing the shampoo formulations A, B, C and D. Similarly the effect of different levels of sorbic acid can be determined by testing shampoo formulations E, F and G. The effect of a combination of preservative fragrance and sorbic acid is given by testing shampoo formulation H. I will show the effect of not having any preservatives present.

The test microbes SA, EC and CA were grown as described in the preservative efficacy test above.

99 ml of the respective formulations were introduced into a 250 ml sterile flask and 1 ml of the respective innoculum ($10^8$ CFU) was added aseptically to the flask and the contents mixed gently by agitating. The sample was incubated for 7 days at 30°C.

0.1 ml of the respective incubated solutions was then assessed for microbial contamination by the plate count method described in the preservative efficacy test above. The results are shown below:

| CFUs ml$^{-1}$ | | | | | | | | | |
|---|---|---|---|---|---|---|---|---|---|
| | A | B | C | D | E | F | G | H | I |
| SA | $3.1 \times 10^2$ | <20 | <20 | <20 | <20 | <20 | <20 | <20 | $>10^6$ |
| CE | $>10^6$ | $2.6 \times 10^5$ | $1.4 \times 10^2$ | <20 | $1.1 \times 10^4$ | $4.7 \times 10^2$ | <20 | <20 | $>10^6$ |
| CP | $4.8 \times 10^4$ | <20 | <20 | <20 | $1.7 \times 10^5$ | <20 | <20 | <20 | $8 \times 10^8$ |

A simple analysis gives the following picture:

| | A | B | C | D | E | E | G | H | I |
|---|---|---|---|---|---|---|---|---|---|
| SA | U | P | P | P | P | P | P | P | U |
| CE | U | U | U | P | U | P(U) | P | P | U |
| CP | U | P | P | P | U | P | P | P | U |
| Where P is < 100 CFUs/ml U is > 100 CFUs/ml | | | | | | | | | |

The synergistic activity can thus easily be seen when comparing the preservative action of A to G with H: it can be seen that a level greater than 1.5 % of H26 alone is required for preservation. 2 % H26 (formula D) preserves the shampoo. Sorbic acid alone has to be at a level of greater than 0.1 % to preserve the system. At 0.2 % sorbic acid the shampoo (formula G) is preserved. The combination of 0.5 % perfume H26 and 0.1 % sorbic acid (formula H) is thus at a combined level below that which would be calculated by the method given in the Blakeway and Seu-Salerno paper referenced above, to have a preservative action. Hence the result that this mixture does preserve shows further that the preservative perfume and the organic acid act synergistically.

**Claims**

1. A preservative system comprising one or more of organic acids selected from the group consisting of benzoic acid, sorbic acid, propionic acid, undecylenic acid, salicylic acid, formic acid, usnic acid and/or an ester, and/or a salt thereof, and an antimicrobial perfume or perfume component.

2. A preservative system according to claim 1, in which the antimicrobial perfume is present from ca. 0,05% to 2%, preferably ca. 0.3 to 0.7%.

3. A preservative system according to claim 2, in which the organic acid is present at a level between 0.01 to 1%, preferably ca. 0.05 to 0.7%.

4. A preservative system according to claim 3, in which the organic acid is benzoic acid, sorbic acid or salicylic acid.

5. A preservative system according to claim 1-6, in which the pH of the product is pH 3 - pH 6, preferably pH 4 - 5.5.

6. A preservative system according to any one of claims 1 to 6, containing additionally one or more surface active agents.